# EUROPÄISCHE PATENTSCHRIFT

(11) **EP 2 072 564 B1**
(45) Veröffentlichungstag und Bekanntmachung des Hinweises auf die Patenterteilung: **03.07.2013**
(21) Anmeldenummer: 07150155.5
(22) Anmeldetag: 19.12.2007
(51) Int. Cl.: C08J 9/12, C09J 175/04, C08G 18/10, C08K 3/04, C08J 9/30, C09J 201/10, C09J 5/08

(54) **Einkomponentiger, feuchtigkeitshärtender Polymerschaum**
One-component moisture-curable polymer foam
Mousse de polymère à un composant, durcissant à l'humidité

(43) Veröffentlichungstag der Anmeldung: 24.06.2009
(73) Patentinhaber: Sika Technology AG, 6340 Baar (CH)
(72) Erfinder: Erdelt, Sabine, 8049, Zürich (CH); Cutri, Roberto, 5620, Bremgarten (CH); Jäger, Urs, 8645, Jona (CH)
(74) Vertreter: Sika Patent Attorneys

(56) Entgegenhaltungen:
- EP-A- 0 405 721
- DE-A1- 2 521 277
- DE-A1-102005 042 380
- US-A1- 2005 165 124

## Beschreibung

### Technisches Gebiet

Die Erfindung betrifft das Gebiet der einkomponentigen, feuchtigkeitshärtenden Schäume aus Isocyanatgruppen und/oder Alkoxysilangruppen aufweisenden Polymeren.

### Stand der Technik

Aus Gründen des geringeren Materialverbrauchs und der somit einhergehenden Kosteneinsparungen und/oder der Verringerung des Gewichts, aber auch zur Veränderung der Eigenschaften einer Zusammensetzung oder zum Füllen von Hohlräumen zur Schalldämmung oder Verstärkung, werden schon seit langem Zusammensetzungen, welche mehrheitlich als Kleb- oder Dichtstoffe verwendet werden, geschäumt.

Es sind auch Polyurethanzusammensetzungen bekannt, welche beispielsweise in Druckbehältern aufbewahrt werden, wobei die Zusammensetzung bei der Applikation, also beim Austritt aus dem Druckbehälter und der damit einhergehenden Druckentlastung, durch die Wirkung eines Treibgases aufschäumt. Ebenfalls bekannt sind beispielsweise Zusammensetzungen, welche hitze- oder feuchtigkeitsaktivierbare Treibmittel enthalten und erst nach ihrer Applikation geschäumt werden. Der Nachteil solcher Verfahren zur Schäumung liegt darin, dass eine präzise Applikation des Schaums beinahe unmöglich ist. Die Volumenzunahme der Zusammensetzung und die Richtung, in der sich der Schaum ausdehnt, wenn er durch chemische oder physikalische Treibmittel bei oder nach der Applikation hergestellt wird, lassen sich nicht sehr genau vorhersagen. Der expandierende Schaum kann dabei beispielsweise die zu verklebenden Substrate gegeneinander verschieben oder aus Dichtungsfugen hervorquellen, so dass mangelhafte Endprodukte entstehen.

Ein weiter Nachteil derartiger Schäume ist, dass der Schäumungsgrad nur sehr schwierig einzustellen ist und nicht vor der Applikation überprüft werden kann.

### Darstellung der Erfindung

Die Aufgabe der vorliegenden Erfindung ist es daher, einen einkomponentigen, feuchtigkeitshärtenden Schaum zur Verfügung zu stellen, welcher die Nachteile des Stands der Technik überwindet und präzise appliziert werden kann.

Erfindungsgemäss wird dies durch die Merkmale des ersten Anspruchs erreicht. Überraschenderweise wurde gefunden, dass ein einkomponentiger, feuchtigkeitshärtender Schaum, welcher bereits vor der Applikation geschäumt vorliegt, besonders geeignet ist für die Anwendung als Klebstoff, Dichtstoff, zur Herstellung von Beschichtungen oder zum Ausschäumen von Hohlstrukturen.

Der Vorteil der vorliegenden Erfindung ist unter anderem, dass das Anwendungsgebiet von einkomponentigen, feuchtigkeitshärtenden Zusammensetzungen erweitert wird und diese nun als Schaum auch grossflächig kostengünstig und gewichtseinsparend eingesetzt werden können. Ein weiterer sehr bedeutender Vorteil ist, dass der einkomponentige, feuchtigkeitshärtende Schaum sehr präzise aufgetragen werden kann und seine Form und Struktur während des Aushärtungsvorgangs im Wesentlichen beibehält. Dadurch ist es möglich auch mit einkomponentigen, feuchtigkeitshärtenden Polymerschäumen hochpräzise Haftverbunde oder Dichtungsfugen herzustellen. Ein weiterer Vorteil der Erfindung ist, dass der Schäumungsgrad des einkomponentigen, feuchtigkeitshärtenden Schaums sehr genau eingestellt werden kann und auch Schäume mit einem sehr hohen Gasanteil hergestellt werden können. Durch die genaue Einstellung des Schäumungsgrads lassen sich aus identischen einkomponentigen, feuchtigkeitshärtenden Zusammensetzungen Schäume herstellen, welche unterschiedliche Eigenschaften aufweisen und für unterschiedliche Zwecke eingesetzt werden können.

Durch ein geeignetes Verfahren zur Herstellung und der unmittelbar darauf folgenden Applikation der einkomponentigen, feuchtigkeitshärtenden Schäume ist es sogar möglich, dass der Gasgehalt im Schaum während des Auftragens verändert wird. Dies ist besonderes vorteilhaft, da somit insbesondere bei der maschinellen Applikation mittels Applikationsroboters nicht mehrere Anlagen im Einsatz stehen müssen und die Applikation in einem Stück also ohne Absetzen des Applikationsgeräts erfolgen kann.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Gegenstand der vorliegenden Erfindung ist ein einkomponentiger, feuchtigkeitshärtender Schaum bestehend aus 10 bis 60 Vol.-% mindestens eines Gases und einer einkomponentigen, feuchtigkeitshärtenden Zusammensetzung **Z** enthaltend mindestens ein Isocyanatgruppen und/oder Alkoxysilangruppen aufweisendes Polymer **P** sowie 10 bis 50 Gew.-%, insbesondere 10 bis 30 Gew.-%, Russ bezogen auf das Gesamtgewicht des einkomponentigen, feuchtigkeitshärtenden Schaums.

Unter dem Begriff "Schaum" wird im vorliegenden Dokument ein Gebilde aus gasgefüllten, kugel- oder polyederförmigen Zellen, welche durch flüssige, halbflüssige, hochviskose oder feste Zellstege begrenzt sind, verstanden.

Mit "Poly" beginnende Substanznamen wie Polyol oder Polyisocyanat bezeichnen im vorliegenden Dokument Substanzen, die formal zwei oder mehr der in ihrem Namen vorkommenden funktionellen Gruppen pro Molekül enthalten.

Der Begriff "Polymer" umfasst im vorliegenden Dokument einerseits ein Kollektiv von chemisch einheitlichen, sich aber in Bezug auf Polymerisationsgrad, Molmasse und Kettenlänge unterscheidenden Makromolekülen, das durch eine Polyreaktion (Polymerisation, Polyaddition, Polykondensation) hergestellt wurde. Der Begriff umfasst andererseits auch Derivate eines solchen Kollektivs von Makromolekülen aus Polyreaktionen, Verbindungen also, die durch Umsetzungen, wie beispielsweise Additionen oder Substitutionen, von funktionellen Gruppen an vorgegebenen Makromolekülen erhalten wurden und die chemisch einheitlich oder chemisch uneinheitlich sein können. Der Begriff umfasst weiterhin auch so genannte Prepolymere, das heisst reaktive oligomere Voraddukte, deren funktionelle Gruppen am Aufbau von Makromolekülen beteiligt sind.

Der Begriff "Polyurethanpolymer" umfasst sämtliche Polymere, welche nach dem so genannten Diisocyanat-Polyadditions-Verfahren hergestellt werden. Dies schliesst auch solche Polymere ein, die nahezu oder gänzlich frei sind von Urethangruppen. Beispiele für Polyurethanpolymere sind Polyether-Polyurethane, Polyester-Polyurethane, Polyether-Polyharnstoffe, Polyharnstoffe, Polyester-Polyharnstoffe, Polyisocyanurate und Polycarbodiimide.

Als Polymer **P** geeignet sind einerseits Polymere basierend auf Alkoxysilangruppen terminierten Polymeren, wie sie dem Fachmann unter der Bezeichnung "MS-Polymere" bekannt sind, oder andererseits Polymere basierend auf Alkoxysilangruppen terminierten Polyurethanen, wie sie dem Fachmann unter der Bezeichnung "SPUR" (**S**ilane Terminated **P**oly**ur**ethanes) bekannt sind.

Dies sind beispielsweise Umsetzungsprodukte von Isocyanatgruppen aufweisenden Polyurethanpolymeren mit gegenüber Isocyanaten reaktiven, Alkoxysilangruppen terminierten Organosilanen wie beispielsweise Mercaptoalkylsilanen oder Aminoalkylsilanen, beschrieben beispielsweise in US 3,632,557, insbesondere die Umsetzungsprodukte von Isocyanatgruppen aufweisenden Polyurethanpolymeren mit Michael-Addukten von Aminoalkylsilanen und Malein- oder Fumarsäurediestern, beschrieben beispielsweise in EP 0 403 921; Produkte aus Hydrosilylierungsreaktionen von Polymeren mit endständigen Doppelbindungen, insbesondere von allylterminierten Polyoxyalkylenpolymeren, mit Alkoxysilanen, beschrieben beispielsweise in US 3,971,751 und US 6,207,766; Umsetzungsprodukte von Polymeren enthaltend aktive Wasserstoffatome, beispielsweise in Form von Hydroxyl-oder Mercaptogruppen, mit Isocyanatoalkylsilanen, beschrieben beispielsweise in US 4,345,053 und US 5,990,257; Polymere enthaltend 3-(N-Silylalkyl)-aminopropenoatgruppen, welche Umsetzungsprodukte darstellen aus 3-Oxopropanoatgruppen enthaltenden Polymeren und Aminoalkylsilanen, beschrieben beispielsweise in WO 2004/056905.

Als Polymer **P** geeignet sind andererseits auch Isocyanatgruppen aufweisende Polyurethanpolymere. Derartige geeignete Polyurethanpolymere lassen sich insbesondere herstellen aus der Umsetzung von mindestens einem Polyisocyanat mit mindestens einem Polyol. Diese Umsetzung kann dadurch erfolgen, dass das Polyol und das Polyisocyanat mit üblichen Verfahren, beispielsweise bei Temperaturen von 50 °C bis 100 °C, gegebenenfalls unter Mitverwendung geeigneter Katalysatoren, zur Reaktion gebracht werden, wobei das Polyisocyanat so dosiert ist, dass dessen Isocyanatgruppen im Verhältnis zu den Hydroxylgruppen des Polyols im stöchiometrischen Überschuss vorhanden sind. Vorteilhaft ist das Polyisocyanat so dosiert, dass ein NCO/OH-Verhältnis von 1.5 bis 5, insbesondere eines von 1.8 bis 3, eingehalten wird. Unter dem NCO/OH-Verhältnis wird hierbei das Verhältnis der Anzahl der eingesetzten Isocyanatgruppen zu der Anzahl der eingesetzten Hydroxylgruppen verstanden. Bevorzugt verbleibt im Polyurethanpolymer nach der Umsetzung aller Hydroxylgruppen des Polyols ein Gehalt an freien Isocyanatgruppen von 0.5 bis 15 Gew.-%, besonders bevorzugt von 1 bis 10 Gew.-%.

Als Polyisocyanate für die Herstellung des Polyurethanpolymers können handelsübliche aliphatische, cycloaliphatische oder aromatische Polyisocyanate, insbesondere Diisocyanate, verwendet werden.

Beispielsweise sind das Diisocyanate, deren Isocyanatgruppen an jeweils ein aliphatisches, cycloaliphatisches oder arylaliphatisches C-Atom gebunden sind, auch "aliphatische Diisocyanate" genannt, wie 1,6-Hexamethylendiisocyanat (HDI), 2-Methylpentamethylen-1,5-diisocyanat, 2,2,4- und 2,4,4-Trimethyl-1,6-hexamethylendiisocyanat (TMDI), 1,12-Dodecamethylendiisocyanat, Lysin- und Lysinesterdiisocyanat, Cyclohexan-1,3-diisocyanat, Cyclohexan-1,4-diisocyanat, 1-Isocyanato-3,3,5-trimethyl-5-isocyanatomethylcyclohexan (= Isophorondiisocyanat oder IPDI), Perhydro-2,4'-diphenylmethandiisocyanat und Perhydro-4,4'-diphenylmethandiisocyanat, 1,4-Diisocyanato-2,2,6-trimethylcyclohexan (TMCDI), 1,3- und 1,4-Bis-(isocyanatomethyl)-cyclohexan, m- und p-Xylylendiisocyanat (m- und p-XDI), m- und p-Tetramethyl-1,3-xylylendiisocyanat, m- und p-Tetramethyl-1,4-xylylendiisocyanat, Bis-(1-Isocya-nato-1-methylethyl)-naphthalin; sowie Diisocyanate mit an jeweils ein aromatisches C-Atom gebundenen Isocyanatgruppen, auch "aromatische Diisocyanate" genannt, wie 2,4- und 2,6-Toluylendiisocyanat (TDI), 4,4'-, 2,4'- und 2,2'-Diphenylmethandiisocyanat (MDI), 1,3- und 1,4-Phenylendiisocyanat, 2,3,5,6-Tetramethyl-1,4-diisocyanatobenzol, Naphthalin-1,5-diisocyanat (NDI), 3,3'-Dimethyl-4,4'-diisocyanatodiphenyl (TODI); Oligomere und Polymere der vorgenannten Isocyanate, sowie beliebige Mischungen der vorgenannten Isocyanate.

Geeignete Polyole sind insbesondere Polyetherpolyole, Polyesterpolyole und Polycarbonatpolyole sowie Mischungen dieser Polyole.

Als Polyetherpolyole, auch Polyoxyalkylenpolyole oder Oligoetherole genannt, sind insbesondere jene geeignet, welche Polymerisationsprodukte von Ethylenoxid, 1,2-Propylenoxid, 1,2- oder 2,3-Butylenoxid, Oxetan, Tetrahydrofuran oder Mischungen davon sind, gegebenenfalls polymerisiert mit Hilfe eines Startermoleküls mit zwei oder mehreren aktiven Wasserstoffatomen wie beispielsweise Wasser, Ammoniak oder Verbindungen mit mehreren OH- oder NH-Gruppen wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, Bisphenol A, hydriertes Bisphenol A, 1,1,1-Trimethylolethan, 1,1,1-Trimethylolpropan, Glycerin, Anilin, sowie Mischungen der genannten Verbindungen. Eingesetzt werden können sowohl Polyoxyalkylenpolyole, die einen niedrigen Ungesättigtheitsgrad aufweisen (gemessen nach ASTM D-2849-69 und angegeben in Milliäquivalent Ungesättigtheit pro Gramm Polyol (mEq/g)), hergestellt beispielsweise mit Hilfe von so genannten Double Metal Cyanide Komplex-Katalysatoren (DMC-Katalysatoren), als auch Polyoxyalkylenpolyole mit einem höheren Ungesättigtheitsgrad, hergestellt beispielsweise mit Hilfe von anionischen Katalysatoren wie NaOH, KOH, CsOH oder Alkalialkoholaten.

Besonders geeignet sind Polyoxyethylenpolyole und Polyoxypropylenpolyole, insbesondere Polyoxyethylendiole, Polyoxypropylendiole, Polyoxyethylentriole und Polyoxypropylentriole.

Insbesondere geeignet sind Polyoxyalkylendiole oder Polyoxyalkylentriole mit einem Ungesättigtheitsgrad tiefer als 0.02 mEq/g und mit einem Molekulargewicht im Bereich von 1'000 bis 30'000 g/mol, sowie Polyoxyethylendiole, Polyoxyethylentriole, Polyoxypropylendiole und Polyoxypropylentriole mit einem Molekulargewicht von 400 bis 8'000 g/mol. Unter "Molekulargewicht" versteht man im vorliegenden Dokument stets das Molekulargewichtsmittel Mn.

Ebenfalls besonders geeignet sind so genannte Ethylenoxidterminierte ("EO-endcapped", ethylene oxide-endcapped) Polyoxypropylenpolyole. Letztere sind spezielle Polyoxypropylenpolyoxyethylenpolyole, die beispielsweise dadurch erhalten werden, dass reine Polyoxypropylenpolyole, insbesondere Polyoxypropylendiole und -triole, nach Abschluss der Polypropoxylierungsreaktion mit Ethylenoxid weiter alkoxyliert werden und dadurch primäre Hydroxylgruppen aufweisen. Bevorzugt sind in diesem Fall Polyoxypropylenpolyoxyethylendiole und Polyoxypropylenpolyoxyethylentriole.

Weiterhin geeignet sind Hydroxylgruppen terminierte Polybutadienpolyole, wie beispielsweise solche, die durch Polymerisation von 1,3-Butadien und Allylalkohol oder durch Oxidation von Polybutadien hergestellt werden, sowie deren Hydrierungsprodukte.

Weiterhin geeignet sind Styrol-Acrylnitril gepfropfte Polyetherpolyole, wie sie beispielsweise unter dem Handelsnamen Lupranol^{®} kommerziell erhältlich sind von der Firma Elastogran GmbH, Deutschland.

Als Polyesterpolyole sind insbesondere Polyester geeignet, welche mindestens zwei Hydroxylgruppen tragen und nach bekannten Verfahren, insbesondere der Polykondensation von Hydroxycarbonsäuren oder der Polykondensation von aliphatischen und/oder aromatischen Polycarbonsäuren mit zwei- oder mehrwertigen Alkoholen, hergestellt werden.

Insbesondere geeignet sind Polyesterpolyole, welche hergestellt sind aus zwei- bis dreiwertigen Alkoholen wie beispielsweise 1,2-Ethandiol, Diethylenglykol, 1,2-Propandiol, Dipropylenglykol, 1,4-Butandiol, 1,5-Pentandiol, 1,6-Hexandiol, Neopentylglykol, Glycerin, 1,1,1-Trimethylolpropan oder Mischungen der vorgenannten Alkohole mit organischen Dicarbonsäuren oder deren Anhydriden oder Estern wie beispielsweise Bernsteinsäure, Glutarsäure, Adipinsäure, Trimethyladipinsäure, Korksäure, Azelainsäure, Sebacinsäure, Dodecandicarbonsäure, Maleinsäure, Fumarsäure, Dimerfettsäure, Phthalsäure, Phthalsäureanhydrid, Isophthalsäure, Terephthalsäure, Dimethylterephthalat, Hexahydrophthalsäure, Trimellithsäure und Trimellithsäureanhydrid oder Mischungen der vorgenannten Säuren, sowie Polyesterpolyole aus Lactonen wie beispielsweise ε-Caprolacton.

Besonders geeignet sind Polyesterdiole, insbesondere solche, die hergestellt sind aus Adipinsäure, Azelainsäure, Sebacinsäure, Dodecandicarbonsäure, Dimerfettsäure, Phthalsäure, Isophthalsäure und Terephthalsäure als Dicarbonsäure oder aus Lactonen wie beispielsweise ε-Caprolacton und aus Ethylenglykol, Diethylenglykol, Neopentylglykol, 1,4-Butandiol, 1,6-Hexandiol, Dimerfettsäurediol und 1,4-Cyclohexandimethanol als zweiwertigem Alkohol.

Als Polycarbonatpolyole sind insbesondere jene geeignet, wie sie durch Umsetzung beispielsweise der oben genannten, zum Aufbau der Polyesterpolyole eingesetzten, Alkohole mit Dialkylcarbonaten wie Dimethylcarbonat, Diarylcarbonaten wie Diphenylcarbonat oder Phosgen zugänglich sind. Besonders geeignet sind Polycarbonatdiole, insbesondere amorphe Polycarbonatdiole.

Weitere geeignete Polyole sind Poly(meth)acrylatpolyole.

Ebenfalls geeignet sind weiterhin Polykohlenwasserstoffpolyole, auch Oligohydrocarbonole genannt, beispielsweise polyhydroxyfunktionelle Ethylen-Propylen-, Ethylen-Butylen- oder Ethylen-Propylen-Dien-Copolymere, wie sie beispielsweise von der Firma Kraton Polymers, USA, hergestellt werden, oder polyhydroxyfunktionelle Copolymere aus Dienen wie 1,3-Butandien oder Diengemischen und Vinylmonomeren wie Styrol, Acrylnitril oder Isobutylen, oder polyhydroxyfunktionelle Polybutadienpolyole, beispielsweise solche, die durch Copolymerisation von 1,3-Butadien und Allylalkohol hergestellt werden und auch hydriert sein können.

Weiterhin geeignet sind Polyhydroxyfunktionelle Acrylnitril/Butadien-Copolymere, wie sie beispielsweise aus Epoxiden oder Aminoalkoholen und carboxylterminierten Acrylnitril/Butadien-Copolymeren (kommerziell erhältlich unter dem Namen Hycar^{®} CTBN von der Firma Emerald Performance Materials, LLC, USA) hergestellt werden können.

Diese genannten Polyole weisen bevorzugt ein mittleres Molekulargewicht von 250 bis 30'000 g/mol, insbesondere von 1'000 bis 30'000 g/mol, und eine mittlere OH-Funktionalität im Bereich von 1.6 bis 3 auf.

Besonders geeignete Polyole sind Polyesterpolyole und Polyetherpolyole, insbesondere Polyoxyethylenpolyol, Polyoxypropylenpolyol und Polyoxypropylenpolyoxyethylenpolyol, bevorzugt Polyoxyethylendiol, Polyoxypropylendiol, Polyoxyethylentriol, Polyoxypropylentriol, Polyoxypropylenpolyoxyethylendiol und Polyoxypropylenpolyoxyethylentriol.

Der Anteil des Polymers **P** beträgt vorzugsweise 20 bis 80 Gew.-%, insbesondere 20 bis 60 Gew.-%, bevorzugt 25 bis 50 Gew.-%, bezogen auf das Gesamtgewicht des Schaums.

Der Russ, welcher im einkomponentigen, feuchtigkeitshärtenden Schaum als Füllstoff vorhanden ist, ist insbesondere industriell hergestellter Russ, auch genannt "Carbon Black".

Zusätzlich zum Russ kann der einkomponentige, feuchtigkeitshärtende Schaum gegebenenfalls weitere Füllstoffe wie Glimmer, Talk, Kaolin, Wollastonit, Feldspat, Syenith, Chlorit, Bentonit, Montmorillonit, Calciumcarbonat (gefällt oder gemahlen), Dolomit, Quarz, Kieselsäuren (pyrogen oder gefällt), Cristobalit, Calciumoxid, Aluminiumhydroxid, Magnesiumoxid, Keramikhohlkugeln, Glashohlkugeln, organische Hohlkugeln, Glaskugeln oder Farbpigmente aufweisen.

Das Gas, welches im einkomponentigen, feuchtigkeitshärtenden Schaum enthalten ist, ist ausgewählt aus der Gruppe bestehend aus Stickstoff (N₂), Wasserstoff (H₂), Kohlenmonoxid (CO), Lachgas (N₂O), Edelgas und Gemischen dieser Gase sowie Luft. Insbesondere geeignet sind Stickstoff oder getrocknete Luft. Bevorzugt ist getrocknete Luft. Als getrocknete Luft wird Luft verstanden, welche möglichst wasserfrei, insbesondere vollständig wasserfrei, ist.

Das Gas ist dabei in Zellen im einkomponentigen, feuchtigkeitshärtenden Schaum eingeschlossen, welche insbesondere homogen im Schaum verteilt sind.

Vorzugsweise ist die Zusammensetzung **Z** zur Herstellung des einkomponentigen, feuchtigkeitshärtenden Schaums frei von chemischen Treibmitteln.

Der einkomponentige, feuchtigkeitshärtende Schaum kann weiterhin ein Thixotropiermittel **C** auf Basis eines Harnstoffderivates enthalten. Das Harnstoffderivat ist insbesondere ein Umsetzungsprodukt eines aromatischen monomeren Diisocyanats mit einer aliphatischen Aminverbindung. Es ist auch durchaus möglich, mehrere unterschiedliche monomere Diisocyanate mit einer oder mehreren aliphatischen Aminverbindungen oder ein monomeres Diisocyanat mit mehreren aliphatischen Aminverbindungen umzusetzen. Als besonders vorteilhaft hat sich das Umsetzungsprodukt von 4,4'-Diphenylmethandiisocyanat (MDI) mit Butylamin erwiesen.

Das Harnstoffderivat ist vorzugsweise in einem Trägermaterial vorhanden. Das Trägermaterial kann ein Weichmacher, insbesondere ein Phthalat oder ein Adipat sein, vorzugsweise ein Diisodecylphthalat (DIDP) oder Dioctyladipat (DOA). Das Trägermittel kann auch ein nicht-diffundierendes Trägermittel sein. Dies ist bevorzugt, um eine möglichst geringe Migration nach Aushärtung von nicht regierten Bestandteilen zu gewährleisten. Bevorzugt sind als nicht-diffundierende Trägermittel blockierte Polyurethanpolymere.
Die Herstellung von solchen bevorzugten Harnstoffderivaten und Trägermaterialien sind im Detail in der Patentanmeldung EP 1 152 019 A1 beschrieben. Das Trägermaterial ist vorteilhaft ein blockiertes Polyurethanpolymer, insbesondere erhalten durch Umsetzung eines trifunktionellen Polyetherpolyols mit IPDI und anschliessender Blockierung der endständigen Isocyanatgruppen mit ε-Caprolactam.

Vorteilhaft beträgt der Gesamtanteil des Thixotropiermittels C 0.1 bis 40 Gew.-%, vorzugsweise 5 bis 25 Gew.-%, bezogen auf das Gesamtgewicht des Schaums. Vorzugsweise liegt das Gewichtsverhältnis von Harnstoffderivat zu dem gegebenenfalls vorhandenen Trägermittel zwischen 0.02 : 1 und 1 : 1, insbesondere zwischen 0.05 : 1 und 0.3 : 1.

Der einkomponentige, feuchtigkeitshärtende Schaum kann weitere Bestandteile, insbesondere Katalysatoren, Hitze- und/oder Lichtstabilisatoren, Weichmacher, Lösungsmittel, Treibmittel, Farbstoffe und Pigmente umfassen.

Diese zusätzlichen Bestandteile sind vorzugsweise bereits vor der Herstellung des Schaums in der feuchtigkeitshärtenden Zusammensetzung **Z** enthalten. Deshalb ist es vorteilhaft, die gegebenenfalls vorhandenen weiteren Bestandteile so auszuwählen, dass die Lagerstabilität der feuchtigkeitshärtenden Zusammensetzung **Z**, oder gegebenenfalls auch des einkomponentigen, feuchtigkeitshärtenden Schaums, durch die Anwesenheit eines solchen Bestandteils nicht beeinträchtigt wird. Dabei sollen insbesondere die Schäumbarkeit der Zusammensetzung **Z**, sowie die Applikations- und Aushärtungseigenschaften des Schaums bei der Herstellung und der Lagerung der Zusammensetzung **Z** nicht beeinträchtigt werden. Dies bedingt, dass zur chemischen Aushärtung des beschriebenen Schaums führende Reaktionen, insbesondere der Isocyanatgruppen, während der Lagerung nicht in signifikantem Ausmass auftreten sollen. Es ist deshalb insbesondere von Vorteil, dass die genannten Bestandteile kein, oder höchstens Spuren von, Wasser enthalten oder beim Lagern freisetzen. Aus diesem Grund kann es sinnvoll und angebracht sein, gewisse Bestandteile vor dem Einmischen in die Zusammensetzung chemisch oder physikalisch zu trocknen.

Die beschriebene Zusammensetzung **Z** wird vorzugsweise unter Ausschluss von Feuchtigkeit hergestellt und aufbewahrt. Dadurch bleibt sie lagerstabil, d.h. sie kann unter Ausschluss von Feuchtigkeit in einer geeigneten Verpackung oder Anordnung, wie beispielsweise einem Fass, einem Beutel oder einer Kartusche, über einen Zeitraum von mehreren Monaten bis zu einem Jahr und länger aufbewahrt werden, ohne dass sie sich in einem für ihren Gebrauch relevanten Ausmass verändert.

Als Zusammensetzung **Z** können insbesondere einkomponentige, feuchtigkeitshärtende Kleb- und Dichtstoffe verwendet werden, wie sie unter der Produktlinie Sikaflex^{®} kommerziell erhältlich sind von Sika Schweiz AG.

Nach der Schäumung und der Applikation der Zusammensetzung **Z** erfolgt die Aushärtung des Schaums dadurch, dass er bei der Applikation in Kontakt mit Wasser, insbesondere in Form von Luftfeuchtigkeit, gelangt. Die Aushärtungsreaktion wird auch als Vernetzung bezeichnet.

Das für die Aushärtungsreaktion benötigte Wasser kann entweder aus der Luft stammen (Luftfeuchtigkeit), oder aber der Schaum kann mit einer Wasser enthaltenden Komponente in Kontakt gebracht werden, zum Beispiel durch Bestreichen, beispielsweise mit einem Abglättmittel, oder durch Besprühen, oder es kann dem Schaum bei der Applikation eine Wasser enthaltende Komponente zugesetzt werden, zum Beispiel in Form einer wasserhaltigen Paste, die, beispielsweise über einen Statikmischer, eingemischt wird.

Im ausgehärteten Zustand verfügt der Schaum über eine hohe mechanische Festigkeit bei einer hohen Dehnbarkeit sowie über gute Haftungseigenschaften auch nach starker Belastung mit Feuchtigkeit. Dadurch eignet er sich für eine Vielzahl von Anwendungen, insbesondere als elastischer Klebstoff, als elastischer Dichtstoff oder als elastische Beschichtung.

Weiterhin umfasst die Erfindung ein Verfahren zur Herstellung eines einkomponentigen, feuchtigkeitshärtenden Schaums.

Ein erstes, bevorzugtes, Verfahren zur Herstellung eines einkomponentigen, feuchtigkeitshärtenden Schaums besteht darin, einer einkomponentigen, feuchtigkeitshärtenden Zusammensetzung **Z,** bei Temperaturen von 0 bis 80 °C, insbesondere von 10 bis 60 °C das Gas zuzuführen und mit Hilfe einer Mischvorrichtung in die Zusammensetzung einzumischen und zu verteilen. Die Zuführung des Gases kann in diesem Verfahren beispielsweise dadurch erfolgen, dass das Gas über eine Überdruckleitung in die Zusammensetzung eingeblasen wird, oder dass es durch Unterdruck in einer Mischapparatur in die Zusammensetzung eingesaugt wird.

Ein derartiges bevorzugtes Verfahren ist beispielsweise beschrieben in DE 10 2005 042 380 A1.

Ein zweites Verfahren zur Herstellung eines einkomponentigen, feuchtigkeitshärtenden Schaums besteht darin, einer einkomponentigen, feuchtigkeitshärtenden Zusammensetzung **Z,** welche unter Druck steht, ein Gas, das in flüssigem oder überkritischem Zustand vorliegt, zu injizieren und mit Hilfe einer Mischvorrichtung in die Zusammensetzung einzumischen und zu verteilen. Bei der anschliessenden Druckentspannung der Zusammensetzung auf Atmosphärendruck expandiert das Gas und es entsteht ein Schaum.

Ein wesentlicher Punkt bei allen Verfahren zur Herstellung des einkomponentigen, feuchtigkeitshärtenden Schaums ist, dass die Zusammensetzung **Z** vor der Applikation geschäumt wird, das heisst, dass zum Zeitpunkt der Applikation der Schäumungsvorgang weitgehend abgeschlossen ist. Nur so kann gewährleistet werden, dass die Zusammensetzung präzise aufgetragen werden kann und dass bei der Anwendung des einkomponentigen, feuchtigkeitshärtenden Schaums als Klebstoff keine Verschiebung der zu verklebenden Substrate durch den Schäumungsvorgang während der Aushärtung stattfindet.

Weiterhin umfasst die vorliegende Erfindung die Verwendung eines vorhergehend beschriebenen einkomponentigen, feuchtigkeitshärtenden Schaums als Klebstoff, Dichtstoff oder zur Herstellung von Beschichtungen sowie zum Ausschäumen von Hohlstrukturen. Dabei kann der Schaum für eine breite Anzahl von Einsatzmöglichkeiten verwendet werden.

Insbesondere geeignet ist der erfindungsgemässe einkomponentige, feuchtigkeitshärtende Schaum als feuchtigkeitshärtender Klebstoff für elastische Verklebungen und Abdichtungen im Fahrzeugbau.

Mit einem erfindungsgemässen einkomponentigen, feuchtigkeitshärtenden Schaum basierend auf einer Zusammensetzung **Z** ist es möglich, über unterschiedliche Schäumungsgrade, die Festigkeit des resultierenden feuchtigkeitsgehärteten Schaums zu variieren. Dadurch können aus der gleichen Zusammensetzung **Z** einkomponentige, feuchtigkeitshärtende Schäume mit verschiedenen Gasanteilen hergestellt und für unterschiedliche Zwecke eingesetzt werden. Unter Verwendung einer geeigneten Schäumungs- und Mischanlage, welche unmittelbar vor der Applikationsanlage des einkomponentigen, feuchtigkeitshärtenden Schaums eingesetzt wird, ist es auch möglich, den Schäumungsgrad während der Applikation sehr kurzfristig zu verändern.

Weiterhin betrifft die vorliegende Erfindung ein Verfahren zum Verkleben von Substraten **S1** und **S2** umfassend die Schritte
c1) Applizieren eines einkomponentigen, feuchtigkeitshärtenden Schaums gemäss vorhergehender Beschreibung auf ein Substrat **S1;**
c2) Kontaktieren des einkomponentigen, feuchtigkeitshärtenden Schaums mit einem zweiten Substrat **S2;**
   oder
d1) Applizieren eines einkomponentigen, feuchtigkeitshärtenden Schaums gemäss vorhergehender Beschreibung auf die Substrate **S1** und **S2;**
d2) Fügen der beiden mit dem einkomponentigen, feuchtigkeitshärtenden Schaum beschichteten Substrate **S1** und **S2.**

Das Substrat **S1** besteht dabei aus einem gleichen oder einem unterschiedlichen Material wie das Substrat **S2.**

Die vorliegende Erfindung betrifft auch ein Verfahren zum Abdichten eines Substrats **S1** und/oder **S2** umfassend die Schritte
e1) Applizieren eines einkomponentigen, feuchtigkeitshärtenden Schaums gemäss vorhergehender Beschreibung auf ein Substrat **S1** und/oder ein Substrat **S2;**
   oder
f1) Applizieren eines einkomponentigen, feuchtigkeitshärtenden Schaums gemäss vorhergehender Beschreibung zwischen die Oberflächen der Substrate **S1** und **S2;**

Das Substrat **S1** besteht dabei aus einem gleichen oder einem unterschiedlichen Material wie das Substrat **S2.**

Die vorliegende Erfindung betrifft weiterhin ein Verfahren zur Herstellung einer Beschichtung auf einem Substrat S1 umfassend den Schritt
g1) Applizieren eines einkomponentigen, feuchtigkeitshärtenden Schaums gemäss vorhergehender Beschreibung auf ein Substrat **S1.**

Ebenfalls betrifft die vorliegende Erfindung ein Verfahren zum Ausschäumen von Hohlstrukturen, umfassend den Schritt
h1) Injizieren eines einkomponentigen, feuchtigkeitshärtenden Schaums in eine vorhandene Hohlstruktur.

Dabei kann der Schaum als Dichtung und/oder zur Schalldämmung und/oder zur strukturellen Verstärkung der Hohlstruktur, beispielsweise eines strukturellen Bauteils, eingesetzt werden.

Sowohl nach den Schritten c2) und d2) des Verklebens als auch nach den Schritten e1) und f1) des Abdichtens, nach dem Schritt g1) des Beschichtens und nach dem Schritt h1) des Ausschäumen von Hohlstrukturen erfolgt die Aushärtung des einkomponentigen, feuchtigkeitshärtenden Schaums mittels Wasser, insbesondere in Form von Luftfeuchtigkeit.

Ein weiterer Bestandteil der Erfindung ist, dass in den vorhergehend beschriebenen Verfahren der Schäumungsgrad der Zusammensetzung **Z** und dadurch der Gasgehalt des erfindungsgemässen einkomponentigen, feuchtigkeitshärtenden Schaums, durch Aneinanderreihen oder Zusammenführen der Schäumungs- und der Applikationsapparatur, während der Auftragung des Schaums variiert werden kann. Dies geschieht beispielsweise dadurch, dass die Zusammensetzung **Z** in einer Schäumungsapparatur geschäumt wird, und dass der so hergestellte Schaum direkt aus dieser Schäumungsapparatur heraus appliziert wird. Für die vorliegende Erfindung ist dabei von grosser Bedeutung, dass die Herstellung des einkomponentigen, feuchtigkeitshärtenden Schaums bei der Applikation, das heisst also beispielsweise dann, wenn der Schaum die Düse des Applikationsgeräts verlässt, abgeschlossen ist. Eine geeignete Schäumungs- und Applikationsanlage kann von einem Computer mittels geeigneter Software angesteuert werden um den Schäumungsgrad einzustellen. Ein Vorteil der Variation des Schäumungsgrads während der Applikation ist, dass Schäume mit unterschiedlichen Eigenschaften aus dem gleichen Applikationsgerät, vorzugsweise ohne absetzen, appliziert werden können.

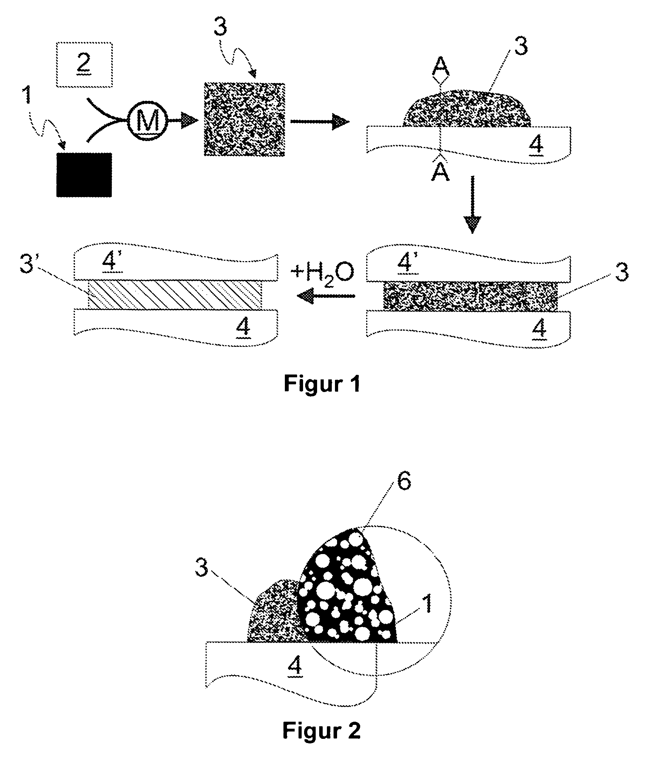

Figur 1 zeigt schematisch ein Verfahren der Herstellung, der Applikation und der Aushärtung eines erfindungsgemässen einkomponentigen, feuchtigkeitshärtenden Schaums. Ein derartiges Verfahren wird beispielsweise für die Verklebung zweier Substrate **S1** und **S2** an der Fertigungslinie angewendet. Die Zusammensetzung **Z** 1 wird dabei zusammen mit einem Gas aus einem Gasbehälter 2 in eine Mischapparatur M geführt, wo die Zusammensetzung Z 1 und das Gas miteinander vermischt werden. Der daraus entstehende einkomponentige, feuchtigkeitshärtende Schaum 3 wird unmittelbar aus der Mischapparatur M mittels Applikationsgerät oder von Hand auf ein Substrat **S1** 4 aufgetragen. Anschliessend wird das Substrat **S1** 4 mit einem zweiten Substrat **S2** 4' über den einkomponentigen, feuchtigkeitshärtenden Schaum gefügt. Der einkomponentige, feuchtigkeitshärtende Schaum härtet danach mittels Wasser, insbesondere in Form von Luftfeuchtigkeit, zu einem feuchtigkeitsgehärteten Schaum 3' aus.

Der Vorteil eines solchen Verfahrens, bei welchem die Schritte der Herstellung und der Applikation des Schaums unmittelbar nacheinander stattfinden, liegt darin, dass der Gasgehalt im einkomponentigen, feuchtigkeitshärtenden Schaum sehr kurzfristig variiert werden kann. Somit können einkomponentige, feuchtigkeitshärtende Schäume aus derselben Zusammensetzung **Z** hergestellt werden und aufgrund ihres unterschiedlichen Gasgehalts unterschiedliche Eigenschaften aufweisen. Die Applikation dieser einkomponentigen, feuchtigkeitshärtenden Schäume kann durch ein solches Verfahren ohne Absetzen des Applikationsgeräts an einem Stück erfolgen.

Figur 2 zeigt schematisch eine Raupe aus einem einkomponentigen, feuchtigkeitshärtenden Schaum 3 auf einem Substrat **S1** 4, wobei ein Ausschnitt (im Kreis) vergrössert dargestellt ist. Das Gas befindet sich dabei in Zellen bzw. Poren 6, welche gleichmässig in der Zusammensetzung **Z** verteilt sind.

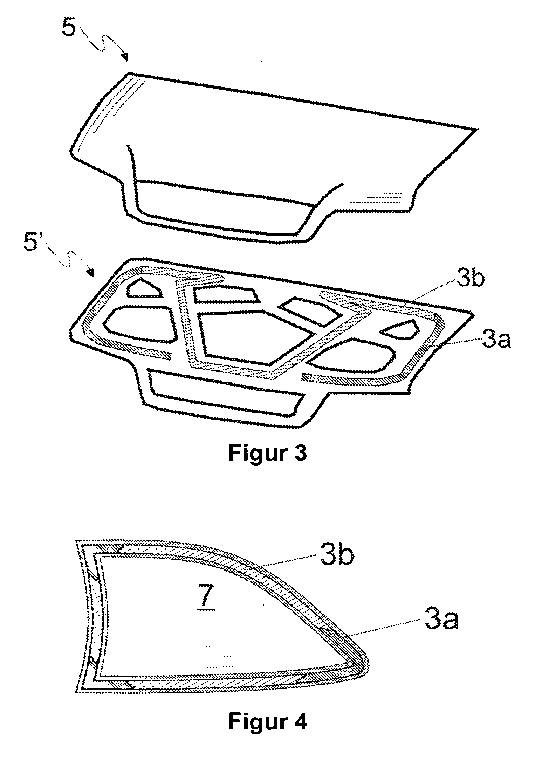

Figur 3 zeigt schematisch eine Motorhaube eines Automobils, bestehend aus einem Aussenblech 5 und einem darunter liegenden rippenförmigen Innenblech 5' zur Versteifung, vor der Verklebung. Auf dem Stahlgerüst 5' wird als Klebstoff ein einkomponentiger, feuchtigkeitshärtender Schaum aus einem Applikationsgerät appliziert, ohne dass dieses abgesetzt wird. Je nach Stelle der Verklebung wird ein Schaum mit einem unterschiedlichen Gasgehalt appliziert. An jenen Stellen, welche eine besonders hohe Festigkeit erfordern und grossen mechanischen Belastungen standhalten müssen, wird vorzugsweise ein einkomponentiger, feuchtigkeitshärtender Schaum 3a mit einem geringen Gasgehalt, das heisst mit einem Gasgehalt von 10 bis 40 Vol.-%, appliziert. An Stellen, wo der einkomponentige, feuchtigkeitshärtende Schaum nur begrenzte strukturelle Eigenschaften aufweisen soll, beispielsweise im inneren Bereich der Motorhaube, wo der einkomponentige, feuchtigkeitshärtende Schaum als reiner Unterfütterungsklebstoff appliziert wird, wird ein einkomponentiger, feuchtigkeitshärtender Schaum 3b mit einem hohen Gasgehalt, das heisst mit einem Gasgehalt von 30 bis 60 Vol.-%, eingesetzt. Durch die Änderung Mischverhältnisses der Zusammensetzung **Z** und des Gases während des Herstellungs- und Applikationsverfahrens, ist es möglich, einkomponentige, feuchtigkeitshärtende Schäume mit einem niedrigen Gasgehalt 3a und solche mit einem hohen Gasgehalt 3b ohne Absetzen aus der gleichen Apparatur am Stück zu applizieren.

Figur 4 zeigt schematisch eine Seitenscheibe 7 eines Automobils, auf deren Rand als Klebstoff ein einkomponentiger, feuchtigkeitshärtender Schaum aufgetragen ist. Gleich wie in Figur 3 beschrieben, wird der Schaum aus einem einzigen Applikationsgerät appliziert. Dabei wird in den Ecken der Seitenscheibe ein einkomponentiger, feuchtigkeitshärtender Schaum 3a mit einem geringen Gasgehalt aufgetragen. In den Zwischenbereichen, wo der einkomponentige, feuchtigkeitshärtende Schaum geringe Festigkeit aufweisen muss, wird ein einkomponentiger, feuchtigkeitshärtender Schaum 3b mit einem hohen Gasgehalt aufgetragen.

Weiterhin umfasst die Erfindung einen feuchtigkeitsgehärteten Schaum, welcher durch einen Schritt des Aushärtens eines einkomponentigen, feuchtigkeitshärtenden Schaums, wie er vorhergehend beschrieben ist, erhalten wird.

Vorzugsweise ist das Gas im feuchtigkeitsgehärteten Schaum in Poren eingeschlossen, welche einen Durchmesser ≤ 1 mm, insbesondere ≤ 0.5 mm, bevorzugt ≤ 0.1 mm, aufweisen und homogen in der Zusammensetzung verteilt sind.

Weiterhin umfasst die vorliegende Erfindung einen, aus derartigen Verfahren zum Verkleben, Abdichten, Beschichten oder Ausschäumen resultierenden Artikel. Ein solcher Artikel ist vorzugsweise ein Fahrzeug oder ein Anbauteil eines Fahrzeugs, insbesondere ein Automobil.

Ferner eignet sich der erfindungsgemässe einkomponentige, feuchtigkeitshärtende Schaum nicht nur für den Automobilbau, sondern auch für andere Anwendungsgebiete. Besonders zu erwähnen sind verwandte Anwendungen im Transportmittelbau wie Schiffe, Lastwagen, Busse oder Schienenfahrzeuge oder im Bau von Gebrauchsgütern wie beispielsweise Waschmaschinen.

### Beispiele

### Herstellung eines einkomponentigen, feuchtigkeitshärtenden Schaums

Es wurden 300 g des Polyurethandichtstoffs Sikaflex^{®} 252, welcher auf Isocyanatgruppen aufweisenden Polyurethanen basiert und kommerziell erhältlich ist von Sika Schweiz AG, in eine Metalldose eingewogen und in einem Dissolver mit einer Rührgeschwindigkeit von 2500 Umdrehungen pro Minute und einem Scheibendurchmesser von 8 cm während 7 Minuten unter Auf- und Ab-Bewegungen der Dose gerührt. Gleichzeitig wurde über eine Druckleitung mit einem Druck von 3 bar trockener Stickstoff in den Klebstoff eingeblasen. Bei gleich bleibender Masse verringerte sich die Dichte dabei von 1.18 kg/m³ zu 1.05 kg/m³ was einer Volumenzunahme von etwa 11 % entspricht. Somit wurde ein einkomponentiger, feuchtigkeitshärtender Schaum mit einem Gasanteil von 11 Vol.-% hergestellt.

### Versuche

Der einkomponentige, feuchtigkeitshärtende Schaum, der wie vorhergehend beschrieben hergestellt wurde, wurde von Hand mit einem Spatel auf ein mit einer kathodischen Tauchlackierung (KTL) beschichtetes Stahlblech, wie es im Automobilbau üblicherweise verwendet wird, appliziert. Als Referenzbeispiel wurde unmittelbar daneben auf die gleiche Weise der ungeschäumte Dichtstoff appliziert. Anschliessend wurde der Prüfkörper bei einer Temperatur von 23 °C und einer relativen Luftfeuchtigkeit von 50% während 7 Tagen ausgehärtet.

### Resultate

Der erfindungsgemässe Schaum wies eine sehr gute Haftung auf dem Substrat auf. Weiterhin wurde durch Aufschneiden des feuchtigkeitsgehärteten Schaums festgestellt, dass die gasgefüllten Poren des Schaums sehr gleichmässig, das heisst homogen, im Schaum verteilt sind.

### Kurze Beschreibung der Zeichnungen

Im Folgenden werden anhand der Zeichnungen Ausführungsbeispiele der Erfindung näher erläutert. Gleiche oder gleich wirkende Elemente sind in den verschiedenen Figuren mit den gleichen Bezugszeichen versehen. Selbstverständlich ist die Erfindung nicht auf gezeigte und beschriebene Ausführungsbeispiele beschränkt.

Es zeigen:
- Figur 1: schematisch ein Verfahren der Herstellung, der Applikation und der Aushärtung eines einkomponentigen, feuchtigkeitshärtenden Schaums;
- Figur 2: schematisch einen Querschnitt durch eine Raupe aus einem einkomponentigen, feuchtigkeitshärtenden Schaum, bzw. entlang der Linie A - A in Figur 1;
- Figur 3: eine schematische Darstellung einer Motorhaube eines Automobils, bestehend aus einem Stahlblech und einem darunter liegenden Stahlgerüst, vor der Verklebung;
- Figur 4: schematisch eine Seitenscheibe eines Automobils mit appliziertem Klebstoff.

In den Figuren sind nur die für das unmittelbare Verständnis der Erfindung wesentlichen Elemente gezeigt.

### Bezugszeichenliste

- 1: Zusammensetzung **Z**
- 2: Gasbehälter
- 3: einkomponentiger, feuchtigkeitshärtender Schaum
- 3a: einkomponentiger, feuchtigkeitshärtender Schaum mit geringem Gasgehalt
- 3b: einkomponentiger, feuchtigkeitshärtender Schaum mit hohem Gasgehalt
- 3': feuchtigkeitsgehärteter Schaum
- 4: Fügeteil/Substrat **S1**
- 4': Fügeteil/Substrat **S2**
- 5: Motorhaube/Aussenblech
- 5': Motorhaube/Innenblech
- 6: Zellen/Poren
- 7: Seitenscheibe
- M: Mischgerät

## Patentansprüche

1. Einkomponentiger, feuchtigkeitshärtender Schaum bestehend aus
a) 10 bis 60 Vol.-% mindestens eines Gases; und
b) einer einkomponentigen, feuchtigkeitshärtenden Zusammensetzung **Z** umfassend
b1) mindestens ein Isocyanatgruppen und/oder Alkoxysilangruppen aufweisendes Polymer **P**; sowie
b2) 10 bis 50 Gew.-% Russ, bezogen auf das Gesamtgewicht des einkomponentigen, feuchtigkeitshärtenden Schaums.

2. Einkomponentiger, feuchtigkeitshärtender Schaum gemäss Anspruch 1, **dadurch gekennzeichnet, dass** das Polymer **P** ein Isocyanatgruppen aufweisendes Polyurethanpolymer ist.

3. Einkomponentiger, feuchtigkeitshärtender Schaum gemäss einem der vorhergehenden Ansprüche, **dadurch gekennzeichnet, dass** die einkomponentige, feuchtigkeitshärtende Zusammensetzung **Z** frei von chemischen Treibmitteln ist.

4. Einkomponentiger, feuchtigkeitshärtender Schaum gemäss einem der vorhergehenden Ansprüche, **dadurch gekennzeichnet, dass** das Gas in Zellen eingeschlossen ist, welche homogen im Schaum verteilt sind.

5. Einkomponentiger, feuchtigkeitshärtender Schaum gemäss einem der vorhergehenden Ansprüche, **dadurch gekennzeichnet, dass** das Gas ausgewählt ist aus der Gruppe bestehend aus Stickstoff (N₂), Wasserstoff (H₂), Kohlenmonoxid (CO), Lachgas (N₂O), Edelgas und beliebigen Gemischen dieser Gase sowie Luft, insbesondere Stickstoff oder getrocknete Luft, bevorzugt getrocknete Luft.

6. Einkomponentiger, feuchtigkeitshärtender Schaum gemäss einem der vorhergehenden Ansprüche, **dadurch gekennzeichnet, dass** der Anteil des Russes 10 bis 30 Gew.-%, bezogen auf das Gesamtgewicht des einkomponentigen, feuchtigkeitshärtenden Schaums, beträgt.

7. Verfahren zur Herstellung eines einkomponentigen, feuchtigkeitshärtenden Schaums gemäss einem der Ansprüche 1 bis 6, **dadurch gekennzeichnet,**
- **dass** der einkomponentigen, feuchtigkeitshärtenden Zusammensetzung **Z** bei Temperaturen von 0 bis 80 °C, insbesondere 10 bis 60 °C, das Gas zugeführt wird und mit Hilfe einer Mischvorrichtung in die Zusammensetzung eingemischt und verteilt wird;
oder
- **dass** der einkomponentigen, feuchtigkeitshärtenden Zusammensetzung **Z,** welche unter Druck steht, das Gas, das in flüssigem oder überkritischem Zustand vorliegt, injiziert wird, mit Hilfe einer Mischvorrichtung in die Zusammensetzung **Z** eingemischt und verteilt wird und bei der anschliessenden Druckentspannung der Zusammensetzung expandiert, sodass der Schaum entsteht.

8. Verwendung eines einkomponentigen, feuchtigkeitshärtenden Schaums gemäss einem der Ansprüche 1 bis 6 als Klebstoff, Dichtstoff, zur Herstellung von Beschichtungen oder zum Ausschäumen von Hohlstrukturen.

9. Verwendung gemäss Anspruch 8 als einkomponentiger, feuchtigkeitshärtender Kleb- und/oder Dichtstoff, insbesondere zur Herstellung von elastischen Klebeverbindungen.

10. Verfahren zum Verkleben von Substraten **S1** und **S2** umfassend die Schritte
c1) Applizieren eines einkomponentigen, feuchtigkeitshärtenden Schaums gemäss einem der Ansprüche 1 bis 6 auf ein Substrat **S1;**
c2) Kontaktieren des einkomponentigen, feuchtigkeitshärtenden Schaums mit einem zweiten Substrat **S2;**
oder
d1) Applizieren eines einkomponentigen, feuchtigkeitshärtenden Schaums gemäss einem der Ansprüche 1 bis 6 auf die Substrate **S1** und **S2;**
d2) Fügen der beiden mit dem einkomponentigen, feuchtigkeitshärtenden Schaum beschichteten Substrate **S1** und **S2;**
wobei das Substrat **S1** aus einem gleichen oder einem unterschiedlichen Material wie der Substrat **S2** besteht.

11. Verfahren zum Abdichten eines Substrats **S1** und/oder **S2** umfassend die Schritte
e1) Applizieren eines einkomponentigen, feuchtigkeitshärtenden Schaums gemäss einem der Ansprüche 1 bis 6 auf ein Substrat **S1** und/oder **S2;**
oder
f1) Applizieren eines einkomponentigen, feuchtigkeitshärtenden Schaums gemäss einem der Ansprüche 1 bis 6 zwischen die Oberflächen der Substrate **S1** und **S2;**
wobei das Substrat **S1** aus einem gleichen oder einem unterschiedlichen Material wie der Substrat **S2** besteht.

12. Verfahren zur Herstellung einer Beschichtung auf einem Substrat **S1** umfassend den Schritt
g1) Applizieren eines einkomponentigen, feuchtigkeitshärtenden Schaums gemäss einem der Ansprüche 1 bis 6 auf ein Substrat **S1.**

13. Verfahren zum Ausschäumen von Hohlstrukturen umfassend den Schritt
h1) Injizieren eines einkomponentigen, feuchtigkeitshärtenden Schaums gemäss einem der Ansprüche 1 bis 6 in eine vorhandene Hohlstruktur.

14. Verfahren gemäss einem der Ansprüche 10 bis 13, **dadurch gekennzeichnet, dass** der Schäumungsgrad der Zusammensetzung **Z** und dadurch der Gasgehalt des einkomponentigen, feuchtigkeitshärtenden Schaums gemäss einem der Ansprüche 1 bis 6 während der Applikation des Schaums variiert wird.

15. Feuchtigkeitsgehärteter Schaum, **dadurch gekennzeichnet, dass** der Schaum aus einem einkomponentigen, feuchtigkeitshärtenden Schaum gemäss einem der Ansprüche 1 bis 6 erhalten wird.

16. Feuchtigkeitsgehärteter Schaum gemäss Anspruch 15, **dadurch gekennzeichnet, dass** das Gas in Poren eingeschlossen ist, welche einen Durchmesser ≤ 1 mm, insbesondere ≤ 0.5 mm, bevorzugt ≤ 0.1 mm, aufweisen und homogen in der Zusammensetzung verteilt sind.

17. Artikel, welcher nach einem Verfahren gemäss einem der Ansprüche 10 bis 14 verklebt, abgedichtet, ausgeschäumt oder beschichtet wurde.

18. Artikel gemäss Anspruch 17, **dadurch gekennzeichnet, dass** der Artikel ein Fahrzeug, ein Transportmittel oder ein Gebrauchsgut, insbesondere ein Automobil, ein Schiff, ein Lastwagen, ein Bus, ein Schienenfahrzeug, bevorzugt ein Automobil, ist.

## Claims

1. One-component, moisture-curing foam consisting of:
a) 10 to 60 % by volume of at least one gas; and
b) a one-component, moisture-curing composition **Z** comprising
b1) at least one polymer **P** having isocyanate groups and/or alkoxysilane groups; and
b2) 10 to 50 % by weight of carbon black, based on the total weight of the one-component, moisture-curing foam.

2. One-component, moisture-curing foam according to claim 1, **characterised in that** the polymer **P** is a polyurethane polymer having isocyanate groups.

3. One-component, moisture-curing foam according to any of the preceding claims, **characterised in that** the one-component, moisture-curing composition **Z** is free of chemical blowing agents.

4. One-component, moisture-curing foam according to any of the preceding claims, **characterised in that** the gas is enclosed in cells which are homogeneously distributed in the foam.

5. One-component, moisture-curing foam according to any of the preceding claims, **characterised in that** the gas is selected from the group consisting of nitrogen (N₂), hydrogen (H₂), carbon monoxide (CO), nitrous oxide (N₂O), noble gas and any mixtures of these gases and air, more particularly nitrogen or dried air, preferably dried air.

6. One-component, moisture-curing foam according to any of the preceding claims, **characterised in that** the proportion of carbon black is 10 to 30 % by weight, based on the total weight of the one-component, moisture-curing foam.

7. Process for producing a one-component, moisture-curing foam according to any of claims 1 to 6, **characterised in that**:
- the gas is fed to the one-component, moisture-curing composition **Z** at temperatures of 0 to 80 °C, more particularly 10 to 60 °C, and is mixed into the composition and distributed by means of a mixing device;
or
- the gas, which is present in a liquid or supercritical state, is injected into the one-component, moisture-curing composition **Z** which is under pressure, is mixed into the composition **Z** and distributed by means of a mixing device, and is expanded during the subsequent pressure relief of the composition, and therefore the foam forms.

8. Use of a one-component, moisture-curing foam according to any of claims 1 to 6 as an adhesive, a sealant, for producing coatings or for foaming hollow structures.

9. Use according to claim 8 as a one-component, moisture-curing adhesive and/or sealant, more particularly for producing resilient bonded joints.

10. Process for adhesively bonding substrates **S1** and **S2,** comprising the steps of:
c1) applying a one-component, moisture-curing foam according to any of claims 1 to 6 to a substrate **S1;**
c2) bringing the one-component, moisture-curing foam into contact with a second substrate **S2;**
or
d1) applying a one-component, moisture-curing foam according to any of claims 1 to 6 to the substrates **S1** and **S2;**
d2) joining the two substrates **S1** and **S2** which are coated with the one-component, moisture-curing foam;
wherein the substrate **S1** consists of a material which is identical to or different from that of the substrate **S2.**

11. Process for sealing a substrate **S1** and/or **S2,** comprising the steps of:
e1) applying a one-component, moisture-curing foam according to any of claims 1 to 6 to a substrate **S1** and/or **S2;**
or
f1) applying a one-component, moisture-curing foam according to any of claims 1 to 6 between the surfaces of the substrates **S1** and **S2;**
wherein the substrate **S1** consists of a material which is identical to or different from that of the substrate **S2.**

12. Process for producing a coating on a substrate **S1,** comprising the step of:
g1) applying a one-component, moisture-curing foam according to any of claims 1 to 6 to the substrate **S1.**

13. Process for foaming hollow structures, comprising the step of:
h1) injecting a one-component, moisture-curing foam according to any of claims 1 to 6 into an existing hollow structure.

14. Process according to any of claims 10 to 13, **characterised in that** the degree of foaming of the composition **Z** and hence the gas content of the one-component, moisture-curing foam according to any of claims 1 to 6 are varied during the application of the foam.

15. Moisture-cured foam, **characterised in that** the foam is obtained from a one-component, moisture-curing foam according to any of claims 1 to 6.

16. Moisture-cured foam according to claim 15, **characterised in that** the gas is enclosed in pores which have a diameter of ≤ 1 mm, more particularly ≤ 0.5 mm, preferably ≤ 0.1 mm, and are homogeneously distributed in the composition.

17. Article which has been adhesively bonded, sealed, foamed or coated in a process according to any of claims 10 to 14.

18. Article according to claim 17, **characterised in that** the article is a vehicle, a means of transport or a consumer article, more particularly a car, a ship, a lorry, a bus, a rail vehicle, preferably a car.

## Revendications

1. Mousse monocomposant durcissant à l'humidité, constituée de :
a) 10 à 60 % en volume d'au moins un gaz ; et
b) un composé Z monocomposant et durcissant à l'humidité comprenant :
b1) au moins un polymère P comportant des groupes isocyanate et/ou des groupes alcoxysilane ; ainsi que
b2) 10 à 50 % en poids de noir de carbone, exprimé par rapport au poids total de la mousse monocomposant durcissant à l'humidité.

2. Mousse monocomposant durcissant à l'humidité selon la revendication 1, **caractérisée en ce que** le polymère P est un polyuréthane comportant des groupes isocyanate.

3. Mousse monocomposant durcissant à l'humidité selon l'une des revendications précédentes, **caractérisée en ce que** le composé Z monocomposant et durcissant à l'humidité est exempt d'agent moussant chimique.

4. Mousse monocomposant durcissant à l'humidité selon l'une des revendications précédentes, **caractérisée en ce que** le gaz est enfermé dans des cellules qui sont réparties de manière homogène dans la mousse.

5. Mousse monocomposant durcissant à l'humidité selon l'une des revendications précédentes, **caractérisée en ce que** le gaz est choisi dans le groupe constitué de : azote (N₂), hydrogène (H₂), monoxyde de carbone (CO), protoxyde d'azote (N₂O), gaz inerte et mélanges quelconques de ces gaz ainsi que air, notamment azote ou air séché, de préférence air séché.

6. Mousse monocomposant durcissant à l'humidité selon l'une des revendications précédentes, **caractérisée en ce que** la proportion de noir de carbone est de 10 à 30 % en poids, exprimée par rapport au poids total de la mousse monocomposant durcissant à l'humidité.

7. Procédé pour la fabrication d'une mousse monocomposant durcissant à l'humidité selon l'une des revendications 1 à 6, **caractérisé**
- **en ce que** le gaz est amené au composé Z, monocomposant et durcissant à l'humidité, à des températures comprises entre 0 et 80 °C, notamment entre 10 et 60 °C, et est ajouté, mélangé et réparti dans le composé à l'aide d'un dispositif mélangeur ;
ou
- **en ce que** le gaz qui est présent à l'état liquide ou supercritique est injecté dans le composé Z, monocomposant et durcissant à l'humidité, qui est sous pression, et est ajouté, mélangé et réparti dans le composé Z à l'aide d'un dispositif mélangeur puis est détendu lors de la détente consécutive du composé de telle sorte que la mousse se forme.

8. Utilisation d'une mousse monocomposant durcissant à l'humidité selon l'une des revendications 1 à 6 comme produit adhésif, produit d'étanchéité, pour la fabrication d'enduits ou pour le moussage de structures creuses.

9. Utilisation selon la revendication 8 comme produit adhésif et/ou d'étanchéité, monocomposant et durcissant à l'humidité, notamment pour la fabrication d'assemblages collés élastiques.

10. Procédé pour coller des substrats S1 et S2, comprenant les étapes :
c1) application d'une mousse monocomposant et durcissant à l'humidité selon l'une des revendications 1 à 6 sur un substrat S1 ;
c2) mise en contact de la mousse monocomposant et durcissant à l'humidité avec un second substrat S2 ;
ou
d1) application d'une mousse monocomposant et durcissant à l'humidité selon l'une des revendications 1 à 6 sur les substrats S1 et S2
d2) assemblage des deux substrats S1 et S2 enduits de la mousse monocomposant et durcissant à l'humidité ;
le substrat S1 étant constitué du même matériau que le substrat S2 ou d'un matériau différent.

11. Procédé pour étanchéifier un substrat S1 et/ou S2, comprenant les étapes :
e1) application d'une mousse monocomposant et durcissant à l'humidité selon l'une des revendications 1 à 6 sur un substrat S1 et/ou S2 ;
ou
f1) application d'une mousse monocomposant et durcissant à l'humidité selon l'une des revendications 1 à 6 entre les surfaces des substrats S1 et S2 ;
le substrat S1 étant constitué du même matériau que le substrat S2 ou d'un matériau différent.

12. Procédé de fabrication d'un enduit sur un substrat S1, comprenant l'étape :
g1) application d'une mousse monocomposant et durcissant à l'humidité selon l'une des revendications 1 à 6 sur un substrat S1.

13. Procédé de moussage de structures creuses, comprenant l'étape :
h1) injection d'une mousse monocomposant et durcissant à l'humidité selon l'une des revendications 1 à 6 dans une structure creuse existante.

14. Procédé selon l'une des revendications 10 à 13, **caractérisé en ce que** le degré de moussage du composé Z et ainsi la teneur en gaz de la mousse monocomposant et durcissant à l'humidité selon l'une des revendications 1 à 6 sont modifiés pendant l'application de la mousse.

15. Mousse durcie à l'humidité, **caractérisée en ce que** la mousse est obtenue à partir d'une mousse monocomposant et durcissant à l'humidité selon l'une des revendications 1 à 6.

16. Mousse durcie à l'humidité selon la revendication 15, **caractérisée en ce que** le gaz est enfermé dans des pores qui ont un diamètre ≤ 1 mm, notamment ≤ 0,5 mm, de préférence ≤ 0,1 mm, et qui sont répartis de manière homogène dans le composé.

17. Article qui a été collé, étanchéifié, moussé ou enduit selon un procédé selon l'une des revendications 10 à 14.

18. Article selon la revendication 17, **caractérisé en ce que** l'article est un véhicule, un moyen de transport ou un bien d'équipement ménager, notamment une automobile, un bateau, un camion, un bus, un véhicule sur rails, de préférence une automobile.
